# EUROPÄISCHE PATENTSCHRIFT

(11) **EP 4 410 732 B1**
(45) Veröffentlichungstag und Bekanntmachung des Hinweises auf die Patenterteilung: **29.10.2025**
(21) Anmeldenummer: 24154240.6
(22) Anmeldetag: 26.01.2024
(51) Int. Cl.: B66C 1/02

(54) **BEDIENVORRICHTUNG FÜR EINEN SCHLAUCHHEBER SOWIE SCHLAUCHHEBER**
CONTROL DEVICE FOR A HOSE LIFTER AND HOSE LIFTER
DISPOSITIF DE COMMANDE POUR UN DISPOSITIF DE LEVAGE DE TUYAU AINSI QUE DISPOSITIF DE LEVAGE DE TUYAU

(30) Priorität: 01.02.2023 DE 102023102438
(43) Veröffentlichungstag der Anmeldung: 07.08.2024
(73) Patentinhaber: J. Schmalz GmbH, 72293 Glatten (DE)
(72) Erfinder: Burt, Hans, 72160 Horb a.N. (DE); Müller, Daniel, 72221 Haiterbach (DE); Urbschat, Fabian, 72270 Baiersbronn (DE); Dreher, Stefan, 72218 Wildberg (DE); Hoppe, Arthur, 72290 Loßburg (DE)
(74) Vertreter: DREISS Patentanwälte PartG mbB

(56) Entgegenhaltungen:
- DE-A1- 102020 128 380
- US-A1- 2019 275 684

## Beschreibung

Die Erfindung betrifft eine Bedienvorrichtung für einen Schlauchheber sowie einen Schlauchheber, der mit einer solchen Bedienvorrichtung ausgestattet ist.

Schlauchheber sind Unterdruck-Handhabungsvorrichtungen mit welchen Lasten mit Hilfe von Unterdruck angehoben, gegebenenfalls verlagert und wieder abgesetzt werden können. Die Hubkraft wird mittels eines Hubschlauchs ausgeübt, der durch Beaufschlagung seines Schlauchinnenraums mit Unterdruck verkürzbar und durch Abbau des in ihm herrschenden Unterdrucks wieder verlängerbar ist. An einem Ende des Hubschlauchs ist üblicherweise ein Endeffektor zum Greifen eines Gegenstands angeordnet. Hierbei kann es sich um eine mechanische Greifvorrichtung handeln, insbesondere aber um eine Sauggreifvorrichtung.

Um den Hubschlauch und/oder den Endeffektor zu bedienen, ist zwischen Hubschlauch und Endeffektor eine Bedienvorrichtung vorgesehen, welche in der Regel ein Belüftungsventil zum Belüften des Schlauchinnenraums und/oder des Endeffektors umfasst.

Ein Schlauchheber mit Bedienvorrichtung, umfassend ein manuell betätigbares Belüftungsventil, ist beispielsweise aus der US 2019/0275684 A1 bekannt.

Die DE 10 2008 028 205 C5 zeigt eine gattungsgemäße Bedienvorrichtung für Schlauchheber mit einem Handgriff, welcher einen manuell betätigbaren Abzug aufweist. Der Abzug steuert ein Belüftungsventil an, durch welches ein Zustrom von Umgebungsluft in den Hubschlauch gesteuert wird. Im Konkreten wird bei Betätigung des Abzugs dem Hubschlauch Luft aus der Umgebung des Hubschlauchs zugeführt, wodurch sich der Druck im Schlauchinnenraum erhöht und der Hubschlauch sich in Folge verlängern kann, ggf. unter Wirkung der Schwerkraft. Wird der Abzug losgelassen, schließt das Belüftungsventil wieder, sodass ein Zustrom von Umgebungsluft in den Hubschlauch unterbrochen wird, in Folge dessen sich der Hubschlauch automatisch wieder in Richtung seiner Endlage zusammenzieht. Dieses automatische Verfahren in die Endlage ist jedoch nicht immer erwünscht. Stattdessen kann es vorteilhaft sein, wenn der Schlauchheber nicht in die Endlage verfährt, sondern in einer voreingestellten Schwebehöhe verbleibt, bspw. um die Bedienvorrichtung zur Vorbereitung eines nächsten Transportvorgangs eines Werkstücks aus dieser Arbeitshöhe heraus ergreifen zu können. Zu diesem Zweck ist es, bspw. aus der DE 10 2020 128 380 A1, bekannt, an der Bedienvorrichtung einen separaten Rasthebel vorzusehen, welcher den Abzug in einer definierten Schaltstellung arretiert und somit einen definierten Zustrom von Umgebungsluft ermöglicht. bekannte Vorrichtung aus der DE 10 2020 128 380 A1 umfasst u. a. einen Hubschlauchanschluss, eine Endeffektor-Kupplung, eine Ventileinrichtung zur Steuerung von Strömungsverbindungen sowie einen Bedienmechanismus mit zwei Bedienelementen, die über eine Getriebeeinrichtung mit einem beweglichen Ventilelement (Ventilhülse) gekoppelt sind.

Der Erfindung liegt die Aufgabe zugrunde, eine Bedienung eines Schlauchhebers intuitiver zu gestalten. Darüber hinaus ist eine zuverlässige und gleichzeitig kostengünstige Ausgestaltung wünschenswert.

Diese Aufgabe wird erfindungsgemäß durch eine Bedienvorrichtung mit den Merkmalen des Anspruchs 1 gelöst. Die Bedienvorrichtung ist zum Bedienen eines Schlauchhebers ausgebildet. Insbesondere handelt es sich bei der Bedienvorrichtung um eine Einhand-Bedienvorrichtung für einen Schlauchheber. Insofern kann die Bedienvorrichtung derart ausgebildet sein, dass sie mit einer Hand bedienbar ist.

Der Schlauchheber umfasst einen Endeffektor, insbesondere in Form einer Sauggreifvorrichtung, und einen Hubschlauch. Der Hubschlauch weist einen Schlauchinnenraum auf. Der Hubschlauch ist durch Beaufschlagung des Schlauchinnenraums mit Unterdruck verkürzbar und durch Belüften des Schlauchinnenraums (also durch Einströmen von Luft, insbesondere Umgebungsluft, in den Schlauchinnenraum) wieder verlängerbar.

Die Bedienvorrichtung umfasst einen Hubschlauchanschluss zur Strömungsverbindung mit dem Schlauchinnenraum des Hubschlauchs. Insbesondere umfasst die Bedienvorrichtung außerdem eine Verbindungseinrichtung zur Anbindung der Bedienvorrichtung an den Hubschlauch.

Die Bedienvorrichtung umfasst außerdem eine Endeffektor-Kupplung zur Ankopplung des Endeffektors an die Bedienvorrichtung. Insofern ist der Endeffektor über die Bedienvorrichtung mit dem Hubschlauch verbindbar. Die Endeffektor-Kupplung ist vorzugsweise an einer dem Hubschlauchanschluss gegenüberliegenden Seite der Bedienvorrichtung angeordnet. Bei Verwendung in einem Schlauchheber ist die Bedienvorrichtung insofern insbesondere zwischen Hubschlauch und Endeffektor angeordnet.

Die Bedienvorrichtung umfasst außerdem eine Ventileinrichtung zur Steuerung von Strömungsverbindungen, insbesondere einer Strömungsverbindung zwischen Hubschlauch und Umgebung sowie optional einer Strömungsverbindung zwischen Hubschlauch und Endeffektor.

Die Bedienvorrichtung umfasst außerdem einen Bedienmechanismus zum Betätigen der Ventileinrichtung.

Die Ventileinrichtung umfasst ein Belüftungsventil zur Belüftung des Hubschlauchanschlusses und somit - bei angeschlossenem Hubschlauch - zur Belüftung des Schlauchinnenraums des Hubschlauchs. Das Belüftungsventil ist insbesondere dazu ausgebildet, den Hubschlauchanschluss bedarfsweise mit einer Umgebung der Bedienvorrichtung zu verbinden. Insofern kann über das Belüftungsventil Umgebungsluft in den Hubschlauchanschluss einströmen.

Das Belüftungsventil umfasst eine Ventilklappe. Die Ventilklappe ist insbesondere um eine Schwenkachse schwenkbar. Die Ventilklappe ist zwischen einer Offenstellung und einer Geschlossenstellung verstellbar, vorzugsweise derart, dass die Ventilklappe zwischen Offenstellung und Geschlossenstellung (als den beiden Endstellungen) verschiedene, insbesondere beliebige, Zwischenstellungen bzw. Öffnungswinkel einnehmen kann.

In der Offenstellung der Ventilklappe ist ein Strömungsweg von dem Hubschlauchanschluss zu einer Umgebung der Bedienvorrichtung, insbesondere zu einem Belüftungsanschluss der Bedienvorrichtung, freigegeben. In der Geschlossenstellung ist dieser Strömungsweg, d.h. der Strömungsweg zwischen Hubschlauchanschluss und Umgebung, verschlossen. Die Ventilklappe ist insofern insbesondere in einem Strömungsweg zwischen Hubschlauchanschluss und Umgebung bzw. Belüftungsanschluss angeordnet.

Der Bedienmechanismus umfasst ein erstes Bedienelement und ein zweites, insbesondere separat bedienbares, Bedienelement. Das erste Bedienelement und das zweite Bedienelement sind mit der Ventilklappe mechanisch derart gekoppelt, dass durch mechanisches, insbesondere manuelles, Betätigen, insbesondere Eindrücken, des ersten und/oder des zweiten Bedienelements ein Öffnungswinkel der Ventilklappe verstellbar ist, also die Ventilklappe zwischen Geschlossenstellung und Offenstellung verstellbar ist. Insbesondere sind das erste Bedienelement und das zweite Bedienelement mit der Ventilklappe mechanisch derart gekoppelt, dass durch Betätigen, insbesondere Eindrücken, des ersten Bedienelements die Ventilklappe in die Geschlossenstellung überführbar ist und durch Betätigen, insbesondere Eindrücken, des zweiten Bedienelements die Ventilklappe in die Offenstellung überführbar ist.

Die vorgeschlagene Bedienvorrichtung ermöglicht eine besonders intuitive Bedienung des Schlauchhebers. Insbesondere ist durch den Bedienmechanismus mit zwei Bedienelementen eine konstruktiv einfache und in der Handhabung intuitive Bedienmöglichkeit geschaffen, um eine Längenveränderung des Hubschlauchs präzise zu steuern, sodass auch schnelle Handhabungsvorgänge zuverlässig durchgeführt werden können. Gegenüber Ausgestaltungen mit elektromotorisch bewegbaren Ventilen ist die vorgeschlagene Bedienvorrichtung zudem besonders kostengünstig und in der Konstruktion einfach realisierbar. Darüber hinaus ist es nicht erforderlich, eine elektrische Stromversorgung an der Bedienvorrichtung vorzuhalten, was eine Komplexität weiter reduziert.

Das erste und das zweite Bedienelement sind manuell verstellbar an der Bedienvorrichtung angeordnet, insbesondere gehaltert. Insbesondere können das erste Bedienelement und das zweite Bedienelement translatorisch oder rotatorisch verlagerbar, vorzugsweise linear geführt, an der Bedienvorrichtung gehaltert sein. Eine solche Ausgestaltung ermöglicht eine einfache Bedienung und zudem eine direkte Rückkopplung an eine Bedienperson, in welcher Ventilstellung sich das Belüftungsventil bzw. die Ventilklappe befindet. In vorteilhafter Weise kann die Bedienvorrichtung ein Gehäuse, insbesondere in Form eines Bediengriffs, aufweisen. Dann können das erste Bedienelement und das zweite Bedienelement an dem Gehäuse, insbesondere an dem Bediengriff, verlagerbar gehaltert sein.

Das erste Bedienelement und das zweite Bedienelement sind jeweils über eine Getriebeeinrichtung mit der Ventilklappe mechanisch derart gekoppelt, dass eine Verstellbewegung des ersten Bedienelements und eine Verstellbewegung des zweiten Bedienelements (infolge einer manuellen Betätigung der Bedienelemente) in eine Verstellbewegung (Öffnungsbewegung oder in eine Schließbewegung) der Ventilklappe übertragen wird.

Im Rahmen einer besonders vorteilhaften Weiterbildung kann der Bedienmechanismus, insbesondere das erste Bedienelement, das zweite Bedienelement und/oder die vorstehend beschriebene Getriebeeinrichtung, derart selbsthemmend ausgebildet, insbesondere mechanisch derart gebremst, sein, dass die Ventilklappe in einer eingestellten Konfiguration verbleibt, also insbesondere sich bei Loslassen des ersten und des zweiten Bedienelements nicht selbsttätig in eine Ausgangskonfiguration zurückbewegt. Beispielsweise ist es denkbar, dass das erste Bedienelement, das zweite Bedienelement und/oder die Getriebeeinrichtung schleppend gelagert sind. Alternativ oder zusätzlich kann auch die Ventilklappe entsprechend selbsthemmend ausgebildet oder gelagert sein. Eine solche Ausgestaltung ermöglicht es, eine Schwebeposition des Hubschlauchs zu realisieren. Denn dadurch, dass die Ventilklappe auch bei einem Loslassen der Bedienvorrichtung in ihrer eingestellten Konfiguration verbleibt, verfährt der Hubschlauchs nicht wie üblich automatisch in die (verkürzte) Endlage, sondern verbleibt in einer der Öffnungsstellung der Ventilklappe entsprechenden Gleichgewichtslage. Auf diese Weise kann der Endeffektor auf einer ergonomisch günstigen Arbeitshöhe "geparkt" werden, bspw. um die Bedienvorrichtung zur Vorbereitung eines nächsten Transportvorgangs eines Werkstücks aus dieser Arbeitshöhe heraus ergreifen zu können. Darüber hinaus kann ein unkontrolliertes Zusammenziehen des Hubschlauchs verhindert werden.

Die Ventilklappe ist insbesondere um eine Schwenkachse schwenkbar an der Bedienvorrichtung gelagert. Die Schwenkachse kann in der Ventilklappenebene verlaufen oder beabstandet zu der Ventilklappenebene verlaufen. In vorteilhafter Weise können das erste Bedienelement und das zweite Bedienelement über eine Getriebeeinrichtung mit der Ventilklappe mechanisch derart gekoppelt sein, dass eine, insbesondere translatorische, Verstellbewegung des ersten Bedienelements und/oder eine, insbesondere translatorische, Verstellbewegung des zweiten Bedienelements (infolge einer manuellen Betätigung der Bedienelemente) in eine Schwenkbewegung der Ventilklappe um die Schwenkachse übertragen wird.

In vorteilhafter Weise kann die Ventilklappe zentrisch gelagert sein. Insofern kann die Ventilklappe um eine in Bezug auf die Ventilklappe zentrisch angeordnete Schwenkachse schwenkbar an der Bedienvorrichtung gehaltert sein. Mit anderen Worten ist die Ventilklappe vorzugsweise derart um eine Schwenkachse schwenkbar an der Bedienvorrichtung gehaltert, dass sich in Bezug auf die Schwenkachse einander gegenüberliegende Enden der Ventilklappe beim Schwenken der Ventilklappe um die Schwenkachse auf einer gemeinsamen Kreisbahn um die Schwenkachse bewegen. Eine solche Ausgestaltung hat den Vorteil, dass auch bei einseitig anliegendem Unterdruck keine Bewegungskraft auf die Ventilklappe ausgeübt wird, was das Risiko einer ungewollten Betätigung der Ventilklappe reduziert und somit eine Schwebesteuerung weiter verbessert. Besonders vorteilhaft kann es sein, wenn die Ventilklappe kreisscheibenförmig ausgebildet ist. Dann kann die Schwenkachse durch den Kreismittelpunkt der Ventilklappe verlaufen.

Im Rahmen einer vorteilhaften Weiterbildung kann das erste Bedienelement über ein erstes Verbindungselement, insbesondere erste Verbindungsstange, mit der Ventilklappe mechanisch gekoppelt, insbesondere verbunden, sein. Das zweite Bedienelement kann über ein zweites Verbindungselement, insbesondere zweite Verbindungsstange, mit der Ventilklappe mechanisch gekoppelt, insbesondere verbunden, sein. Vorzugsweise greifen das erste und das zweite Verbindungselement an der gleichen Seite der Ventilklappe, aber in Bezug auf eine Schwenkachse der Ventilklappe an gegenüberliegenden Abschnitten der Ventilklappe an der Ventilklappe an. Insofern kann es vorteilhaft sein, wenn das erste Verbindungselement an einem ersten Abschnitt der Ventilklappe angreift und das zweite Verbindungselement an einem zweiten Abschnitt der Ventilklappe angreift, wobei der erste Abschnitt und der zweite Abschnitt in Bezug auf eine Schwenkachse der Ventilklappe gegenüberliegend angeordnet sind. Eine solche Ausgestaltung ermöglicht es, auf konstruktiv einfache und zuverlässige Weise einen Öffnungswinkel der Ventilklappe zu verstellen.

In diesem Zusammenhang ist es denkbar, dass das erste Bedienelement und das zweite Bedienelement jeweils sowohl an dem ihm zugeordneten Bedienelement als auch an der Ventilklappe schwenkbar gelagert sind. Insofern kann das erste Verbindungselement sowohl an dem ersten Bedienelement als auch an der Ventilklappe schwenkbar gelagert sein und das zweite Bedienelement kann sowohl an dem zweiten Bedienelement als auch an der Ventilklappe schwenkbar gelagert sein.

Eine besonders intuitive Bedienung kann sich dann ergeben, wenn das erste Bedienelement und das zweite Bedienelement, insbesondere wechselseitig, eine Betätigungsstellung und eine Nicht-Betätigungsstellung einnehmen können. Insbesondere ist die Ventilklappe in der Betätigungsstellung des ersten Bedienelements in Geschlossenstellung und in der Betätigungsstellung des zweiten Bedienelementes geöffnet, insbesondere in Offenstellung. Im vorliegenden Zusammenhang bedeutet wechselseitig insbesondere, dass dann, wenn sich das erste Bedienelement in der Betätigungsstellung befindet, das zweite Bedienelement sich nicht in der Betätigungsstellung befindet, vorzugsweise in der Nicht-Betätigungsstellung befindet, und umgekehrt. Eine solche Ausgestaltung trägt weiter zu einer besonders intuitiven Bedienung bei. Zudem können Fehlbedienungen vermieden werden, da ein gleichzeitiges Betätigen des ersten und des zweiten Bedienelements, also ein gleichzeitiges Überführen des ersten und des zweiten Bedienelements in die Betätigungsstellung, verhindert werden kann.

In diesem Zusammenhang kann es besonders vorteilhaft sein, wenn das erste Bedienelement und das zweite Bedienelement, insbesondere über die Ventilklappe, derart mechanisch zwangsgekoppelt sind, dass beim Überführen des ersten Bedienelementes in Richtung der Betätigungsstellung (also bei Betätigen des ersten Bedienelements) das zweite Bedienelement zwangsläufig in Richtung der Nicht-Betätigungsstellung überführt wird und umgekehrt. Auf diese Weise kann das Risiko einer Fehlbedienung weiter reduziert werden. Vorzugsweise können das erste Bedienelement und das zweite Bedienelement derart, insbesondere über die Ventilklappe, mechanisch zwangsgekoppelt sein, dass sich dann, wenn sich das erste Bedienelement in der Betätigungsstellung befindet, sich das zweite Bedienelement in der Nicht-Betätigungsstellung befindet und umgekehrt.

Die Betätigungsstellung und die Nicht-Betätigungsstellung sind vorzugsweise jeweils Endstellungen der Bedienelemente. Wie vorstehend erwähnt, können die Bedienelemente beispielsweise translatorisch oder rotatorisch verlagerbar, insbesondere linear geführt, an der Bedienvorrichtung gehaltert sein. Dann können die Betätigungsstellung und die Nicht-Betätigungsstellung jeweilige Endstellung eines Verstellbereichs bzw. Schwenkbereichs der Bedienelemente definieren.

Außerdem kann es vorteilhaft sein, wenn das erste Bedienelement und das zweite Bedienelement zwischen ihrer jeweiligen Betätigungsstellung und ihrer jeweiligen Nicht-Betätigungsstellung eine jeweilige Neutralstellung durchlaufen. Die Bedienelemente können insofern jeweils eine Betätigungsstellung, eine Nicht-Betätigungsstellung und eine dazwischenliegende Neutralstellung einnehmen. Vorzugsweise sind das erste Bedienelement und das zweite Bedienelement derart synchronisiert, insbesondere zwangsgekoppelt, dass sich dann, wenn sich das erste Bedienelement in der Neutralstellung befindet, sich das zweite Bedienelement ebenfalls in der Neutralstellung befindet.

Vorzugsweise ist die Ventilklappe in der Neutralstellung des ersten und des zweiten Bedienelements zumindest teilweise geöffnet. Insofern kann der Betätigungsmechanismus derart ausgebildet sein, dass die Ventilklappe dann, wenn sich das erste und das zweite Bedienelement in der Neutralstellung befinden, einen Öffnungswinkel zwischen Offenstellung und Geschlossenstellung einnimmt. Der Öffnungswinkel der Ventilklappe in der Neutralstellung der Bedienelemente kann insbesondere derart gewählt sein, dass der Hubschlauch eine vordefinierte Länge einnimmt (Schwebeposition).

Wie vorstehend erwähnt, kann die Bedienvorrichtung in vorteilhafter Weise ein Gehäuse aufweisen, an welchem das erste und das zweite Bedienelement verlagerbar gehaltert sind, insbesondere linear geführt sind. Dann kann es besonders vorteilhaft sein, wenn das erste und das zweite Bedienelement an dem Gehäuse derart verlagerbar gehaltert sind, insbesondere derart linear geführt sind, dass die Bedienelemente in ihrer jeweiligen Betätigungsstellung relativ zu ihrer Neutralstellung zumindest abschnittsweise in das Gehäuse eingeschoben sind und in ihrer Nicht-Betätigungsstellung relativ zu ihrer Neutralstellung zumindest abschnittsweise aus dem Gehäuse hervorstehen. Auf diese Weise kann einem Bediener auf konstruktiv einfache Weise eine direkte haptische Rückmeldung zur Bedienstellung des jeweiligen Bedienelements und somit zu einer Ventilstellung der Ventileinrichtung gegeben werden, was eine intuitive Bedienung weiter verbessert und Fehlbedienungen reduziert.

Besonders vorteilhaft kann es zudem sein, wenn das Gehäuse einen, insbesondere einhändig umgreifbaren, Bediengriff zum händischen Greifen der Bedienvorrichtung umfasst. Dann können das erste und das zweite Bedienelement an dem Bediengriff angeordnet sein, insbesondere derart, dass das erste Bedienelement mit einem ersten Finger einer Hand, insbesondere dem Zeigefinger, betätigbar ist und das zweite Bedienelement mit einem zweiten Finger der Hand, insbesondere dem Mittelfinger, betätigbar ist. Beispielsweise kann das Gehäuse einen pistolengriffartigen Bediengriff umfassen mit, wobei das erste und das zweite Bedienelement in der Art eines Pistolenabzugs an dem Bediengriff vorgesehen sind.

Im Rahmen einer vorteilhaften Weiterbildung kann die Endeffektor-Kupplung einen Sauganschluss zur Strömungsverbindung mit dem Endeffektor, insbesondere einer Sauggreifvorrichtung, umfassen. Dann kann es vorteilhaft sein, wenn der Hubschlauchanschluss und der Sauganschluss über eine Fluidführung, insbesondere in Form eines Schlauchs oder eines Saugrohrs, miteinander strömungsverbunden sind. Die Bedienvorrichtung kann insofern eine Strömungsverbindung bzw. Fluidleitung zwischen Sauganschluss und Hubschlauchanschluss aufweisen. Beispielsweise kann die Fluidführung in Form einer Saugrohrleitung oder eines Schlauchs ausgebildet sein. Eine solche Ausgestaltung ermöglicht es, den Endeffektor, insbesondere bei Ausgestaltung als Sauggreifvorrichtung, durch den Hubschlauch hindurch mit Unterdruck zu versorgen.

In diesem Zusammenhang kann es ferner vorteilhaft sein, wenn die Ventileinrichtung außerdem ein Sperrventil zum Absperren oder Freigeben eines Strömungswegs zwischen dem Hubschlauchanschluss und dem Sauganschluss, insbesondere durch die Fluidführung, umfasst. Bei Verwendung in einem Schlauchheber kann das Sperrventil insofern dazu ausgebildet sein, den Hubschlauch und den Endeffektor bedarfsweise fluidisch voneinander zu trennen. Bei einer Ausgestaltung des Endeffektors als Sauggreifvorrichtung kann insofern über das Sperrventil beispielsweise gesteuert werden, ob ein Saugkörper der Sauggreifvorrichtung mit Unterdruck versorgt wird oder nicht.

Das Sperrventil kann ein Sperrorgan, insbesondere Sperrklappe, aufweisen, welches eine Freigabestellung und eine Sperrstellung einnehmen kann, wobei in der Freigabestellung der Strömungsweg zwischen dem Hubschlauchanschluss und dem Sauganschluss freigegeben ist und in der Sperrstellung dieser Strömungsweg verschlossen ist. Vorzugsweise ist das Sperrorgan zum Verschließen der vorstehend erwähnten Fluidführung zwischen Sauganschluss und Hubschlauchanschluss ausgebildet.

Das Sperrventil kann über ein drittes Bedienelement betätigbar sein. Besonders vorteilhaft ist es jedoch, wenn das Sperrventil mittels des ersten und/oder des zweiten Bedienelements betätigbar ist, was eine einfache Bedienung begünstigt.

Besonders vorteilhaft kann es sein, wenn das Sperrorgan des Sperrventils und die Ventilklappe des Belüftungsventils über das erste und/oder das zweite Bedienelement mechanisch gekoppelt sind, insbesondere derart, dass sich das Sperrorgan in der Freigabestellung befindet, wenn sich die Ventilklappe des Belüftungsventils in der Geschlossenstellung befindet. Bei Verwendung der Bedienvorrichtung in einem Schlauchheber mit Sauggreifvorrichtung kann dann beispielsweise nach dem Aufsetzen der Sauggreifvorrichtung auf einen zu greifenden Gegenstand, insbesondere mit nur einer Bedienoperation, das Sperrorgan in die Freigabestellung (Sauggreifvorrichtung wird insofern mit Unterdruck versorgt und der Gegenstand angesaugt) und gleichzeitig das Belüftungsventil in die Geschlossenstellung (Hubschlauch wird infolgedessen durch den sich aufbauenden Unterdruck zusammengezogen, sodass Gegenstand angehoben wird) überführt werden.

Im Rahmen einer konstruktiv einfachen und in der Bedienung zuverlässigen Ausgestaltung kann das Sperrorgan als Sperrklappe ausgebildet sein. Die Sperrklappe kann insbesondere dazu ausgebildet sein, eine Öffnung der Fluidführung zwischen Hubschlauchanschluss und Sauganschluss wahlweise freizugeben oder zu verschließen. Die Sperrklappe kann dann mit dem ersten oder dem zweiten Bedienelement mechanisch derart gekoppelt sein, dass durch Betätigen des ersten Bedienelements oder des zweiten Bedienelements ein Öffnungswinkel der Sperrklappe verstellbar ist, insbesondere die Sperrklappe zwischen Sperrstellung und Freigabestellung verstellbar ist.

Um ein Lösen eines von einer Sauggreifvorrichtung angesaugten Gegenstands zu erleichtern, kann es ferner vorteilhaft sein, wenn das Sperrventil außerdem einen Sperrventil-Belüftungsanschluss zur Belüftung des Sauganschlusses, insbesondere zur Belüftung der Fluidführung zwischen Hubschlauchanschluss und Sauganschluss, umfasst.

Das Sperrventil kann dann ein Schließorgan aufweisen, welches dazu ausgebildet, den Sperrventil-Belüftungsanschluss wahlweise freizugeben oder abzusperren. Das Schließorgan weist insbesondere eine Schließstellung, in welcher der Sperrventil-Belüftungsanschluss verschlossen ist, und eine Belüftungsstellung, in welcher der Sperrventil-Belüftungsanschluss geöffnet ist, auf.

In vorteilhafter Weise kann das Schließorgan mit dem Sperrorgan derart gekoppelt, insbesondere mechanisch zwangsgekoppelt, sein, dass dann, wenn sich das Sperrorgan in der Sperrstellung befindet sich das Schließorgan in der Belüftungsstellung befindet, insbesondere eine Strömungsverbindung zwischen einer Umgebung der Bedienvorrichtung und dem Sauganschluss hergestellt ist. Darüber hinaus kann es vorteilhaft sein, dass dann, wenn sich das Sperrorgan in der Freigabestellung befindet, sich das Schließorgan in der Schließstellung befindet, insbesondere eine Strömungsverbindung zwischen Umgebung und Sauganschluss unterbrochen ist.

Der Sperrventil-Belüftungsanschluss kann zur Umgebung der Bedienvorrichtung offen sein, sodass Umgebungsluft in den Sauganschluss, insbesondere in die Fluidführung zwischen Hubschlauchanschluss und Sauganschluss, einströmbar ist. Es ist auch denkbar, dass der Sperrventil-Belüftungsanschluss mit einer Druckfluidversorgung, insbesondere Druckluftversorgung, verbunden ist. Auf diese Weise kann ein schnelles Ablegen bzw. Abblasen eines von einer Sauggreifvorrichtung gehaltenen Gegenstandes begünstigt werden.

In vorteilhafter Weise kann das Schließorgan als Belüftungsklappe ausgebildet sein. Dann kann es vorteilhaft sein, wenn die Sperrklappe und die Belüftungsklappe um eine gemeinsame Schwenkachse schwenkbar an der Bedienvorrichtung gehaltert sind, was eine einfach herstellbare und zuverlässige Verstellung der beiden Klappen ermöglicht.

Im Rahmen einer besonders vorteilhaften Ausgestaltung können die Ventilklappe, das Sperrorgan und das Schließorgan derart mechanisch miteinander gekoppelt sein, dass
- in einer ersten Bedienkonfiguration der Bedienelemente die Ventilklappe des Belüftungsventils in der Geschlossenstellung ist, das Sperrorgan in der Freigabestellung ist und das Schließorgan in der Schließstellung ist,
- in einer zweiten Bedienkonfiguration der Bedienelemente die Ventilklappe des Belüftungsventils zumindest teilweise geöffnet ist, das Sperrorgan in der Freigabestellung ist und das Schließorgan in der Schließstellung ist, und
- in einer dritten Bedienkonfiguration der Bedienelemente die Ventilklappe geöffnet ist (insbesondere weiter geöffnet als in der zweiten Bedienkonfiguration, vorzugsweise in der Offenstellung ist), das Sperrorgan in der Sperrstellung ist und das Schließorgan in der Belüftungsstellung ist.

Vorzugsweise befindet sich in der ersten Bedienkonfiguration das erste Bedienelement in der Betätigungsstellung das zweite Bedienelement in der Nicht-Betätigungsstellung. Vorzugsweise befinden sich in der zweiten Bedienkonfiguration das erste und das zweite Bedienelement jeweils in einer Zwischenstellung zwischen ihrer jeweiligen Betätigungsstellung und ihrer jeweiligen Nicht-Betätigungsstellung, weiter vorzugsweise in der jeweiligen Neutralstellung. Vorzugsweise befindet sich in der dritten Bedienkonfiguration das erste Bedienelement in der Nicht-Betätigungsstellung und das zweite Bedienelement in der Betätigungsstellung.

Die drei Bedienkonfigurationen können insbesondere nacheinander beim Betätigen, insbesondere Eindrücken, des zweiten Bedienelementes durchlaufen werden. Um einer Bedienperson eine haptische Rückmeldung dahingehend zu geben, wann die dritte Bedienkonfiguration erreicht wird (bei der es zu einem Belüften des Sauggreifvorrichtung und somit zum Ablösen eines angesaugten Gegenstands kommt), kann es vorteilhaft sein, wenn das zweite Bedienelement entgegen der Betätigungsrichtung derart beaufschlagt, insbesondere federbeaufschlagt, ist, dass zum Überführen des zweiten Bedienelements aus der zweiten Bedienkonfiguration in die dritte Bedienkonfiguration, insbesondere zum Überführen in die Betätigungsstellung, die Beaufschlagung überwunden werden muss. Die Beaufschlagung ist insofern als Druckpunkt spürbar, was der Bedienperson eine haptische Rückmeldung gibt.

Die vorstehend beschriebene Aufgabe wird auch durch einen Schlauchheber mit einer vorstehend beschriebenen Bedienvorrichtung gelöst. Die vorstehend im Zusammenhang mit der Bedienvorrichtung beschriebenen Merkmale und Vorteile der Bedienvorrichtung können auch zur Ausgestaltung des Schlauchhebers dienen, sodass zur Vermeidung von Wiederholungen auf vorstehende Offenbarung verwiesen wird.

Der Schlauchheber umfasst insbesondere einen Hubschlauch, welcher einen Schlauchinnenraum aufweist und durch Beaufschlagung des Schlauchinnenraums mit Unterdruck verkürzbar und durch belüften des Schlauchinnenraums wieder verlängerbar ist. Der Schlauchheber umfasst außerdem einen Endeffektor, insbesondere Form einer Sauggreifvorrichtung, zum Greifen eines Gegenstandes. Der Endeffektor ist insbesondere durch den Schlauchinnenraum des Hubschlauchs hindurch mit Unterdruck versorgbar. Wie vorstehend erwähnt, ist die Bedienvorrichtung vorzugsweise zwischen dem Hubschlauch und dem Endeffektor angeordnet, wobei der Hubschlauch mit dem Hubschlauchanschluss strömungsverbunden ist und der Endeffektor mit der Endeffektor-Kupplung verbunden ist.

Die Erfindung wird im Folgenden anhand der Figuren näher erläutert. Es zeigen:
- Fig. 1: eine skizzierte Darstellung einer Ausgestaltung eines Schlauchhebers;
- Fig. 2: einen vergrößerten Ausschnitt des Schlauchhebers gemäß Fig. 1 im Bereich der Bedienvorrichtung;
- Fig. 3: eine skizzierte Darstellung der Bedienvorrichtung gemäß Fig. 2 in einer Schnittansicht;
- Fig. 4a-c: skizzierte Darstellungen der Bedienvorrichtung gemäß Fig. 3 zur Erläuterung verschiedener Betätigungsstellungen der Bedienelemente; und
- Fig. 5a-c: vereinfachte schematische Darstellungen einer weiteren Ausgestaltung der Bedienvorrichtung mit Sperrventil.

In der nachfolgenden Beschreibung sowie in den Figuren sind für identische oder einander entsprechende Merkmale jeweils dieselben Bezugszeichen verwendet.

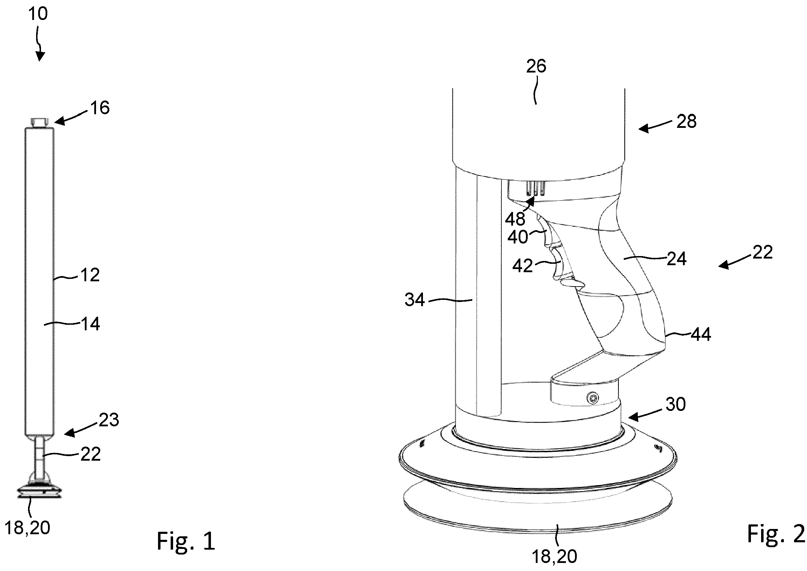

Die Figur 1 zeigt eine Ausgestaltung eines Schlauchhebers, welcher insgesamt mit dem Bezugszeichen 10 bezeichnet ist. Der Schlauchheber 10 umfasst einen Hubschlauch 12, welcher einen Schlauchinnenraum 14 umschließt. Der Hubschlauch 12 ist durch Beaufschlagen des Schlauchinnenraums 14 mit Unterdruck verkürzbar und durch Belüften des Schlauchinnenraums 14 wieder verlängerbar. Mit anderen Worten wird der Hubschlauch 12 je nach Druckniveau im Schlauchinnenraum 14 reversibel verkürzt oder verlängert sich, z.B. unter der Wirkung der Gewichtskraft.

Der Hubschlauch 12 kann an einem ersten (oberen) Ende 16 mit einem Träger oder Gerüst verbunden sein. Es ist auch denkbar, dass der Hubschlauch 12 an dem oberen Ende 16 mit einem Manipulator, bspw. in Form eines Säulenschwenkkrans, befestigt und somit von dem Manipulator verlagerbar ist.

Der Schlauchheber 10 umfasst außerdem einen Endeffektor 18 zum Greifen eines Gegenstandes (nicht dargestellt). Beispielhaft und bevorzugt ist der Endeffektor 18 als Sauggreifvorrichtung 20 zum Ansaugen eines Gegenstands ausgebildet. Wie nachfolgend noch im Detail erläutert, ist der Endeffektor 18 (Sauggreifvorrichtung 20) vorzugsweise durch den Schlauchinnenraum 14 des Hubschlauchs 12 hindurch mit Unterdruck versorgbar. Durch Verkürzen des Hubschlauches 12 kann die Sauggreifvorrichtung 20 und somit ein mit der Sauggreifvorrichtung 20 angesaugter Gegenstand angehoben werden.

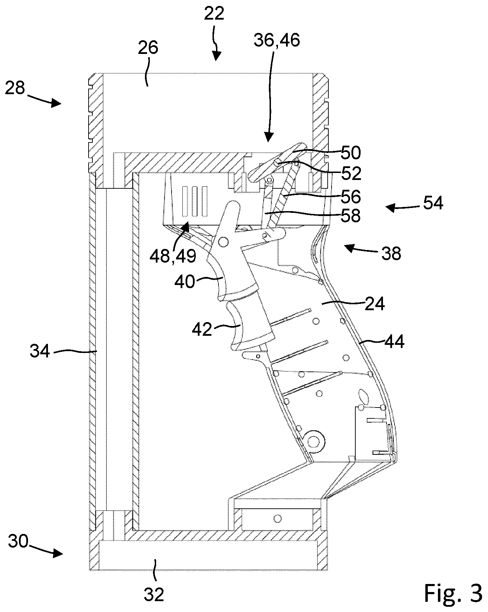

Um den Schlauchheber 10 zu bedienen, ist eine Bedienvorrichtung 22 vorgesehen (Detailansicht vgl. Figuren 2 und 3). Die Bedienvorrichtung 22 ist zwischen dem Hubschlauch 12 und dem Endeffektor 18 angeordnet. Vorzugsweise ist die Bedienvorrichtung 22 an dem zweiten (unteren) Ende 23 des Hubschlauchs 12 gehaltert.

Eine Ausgestaltung der Bedienvorrichtung 22 wird nachfolgend unter Bezugnahme auf die Figuren 2 und 3 näher erläutert.

Die Bedienvorrichtung 22 umfasst einen Bediengriff 24 (Handgriff), welcher insbesondere derart ausgeformt ist, dass eine Bedienperson ihn mit einer Hand greifen kann. Insofern handelt es sich bei der Bedienvorrichtung 22 insbesondere um eine Einhand-Bedienvorrichtung.

Die Bedienvorrichtung 22 umfasst außerdem einen Hubschlauchanschluss 26 zur Strömungsverbindung mit dem Schlauchinnenraum 14 des Hubschlauchs 12 (vgl. Fig. 3). Der Hubschlauchanschluss 26 kann insbesondere Teil einer Hubschlauch-Kupplung 28 sein, welche außerdem eine Verbindungseinrichtung zur mechanischen Verbindung der Bedienvorrichtung 22 mit dem Hubschlauch umfasst.

Die Bedienvorrichtung 22 weist an einer dem Hubschlauchanschluss 26 gegenüberliegenden Seite eine Endeffektor-Kupplung 30 zur Ankopplung des Endeffektors 18 auf (vgl. Fig. 3). Im Beispiel umfasst die Endeffektor-Kupplung 30 außerdem einen optionalen Sauganschluss 32 zur Strömungsverbindung mit dem Endeffektor 18. Wie nachfolgend noch im Detail erläutert, ist der Sauganschluss 32 mittels einer optionalen rohrartigen Fluidführung 34 mit dem Hubschlauchanschluss 26 strömungsverbunden und somit durch den Hubschlauch 12 hindurch mit Unterdruck versorgbar.

Die Bedienvorrichtung 22 umfasst außerdem eine Ventileinrichtung 36 zur Steuerung von Strömungsverbindungen (nachfolgend noch im Detail erläutert). Die Ventileinrichtung 36 ist insbesondere innerhalb eines Gehäuses 44 der Bedienvorrichtung 22 angeordnet (vgl. Fig. 2). Zum Betätigen der Ventileinrichtung 36 ist ein Bedienmechanismus 38 vorgesehen, welcher ein erstes Bedienelement 40 und ein zweites Bedienelement 42 umfasst, deren Funktion im Folgenden noch näher erläutert wird.

Wie in Figur 2 erkennbar, sind das erste Bedienelement 40 und das zweite Bedienelement 42 voneinander separat an dem Bediengriff 24 angeordnet und an diesem schwenkbar gelagert (in der Art eines Pistolenabzugs). Vorzugsweise ist der Bediengriff 24 derart ausgeformt, dass eine Bedienperson ihn mit einer Hand greifen kann und dabei die Bedienelemente 40, 42 mit dieser Hand betätigen kann (z.B. das erste Bedienelement 40 mit dem Zeigefinger und das zweite Bedienelement 42 mit dem Mittelfinger).

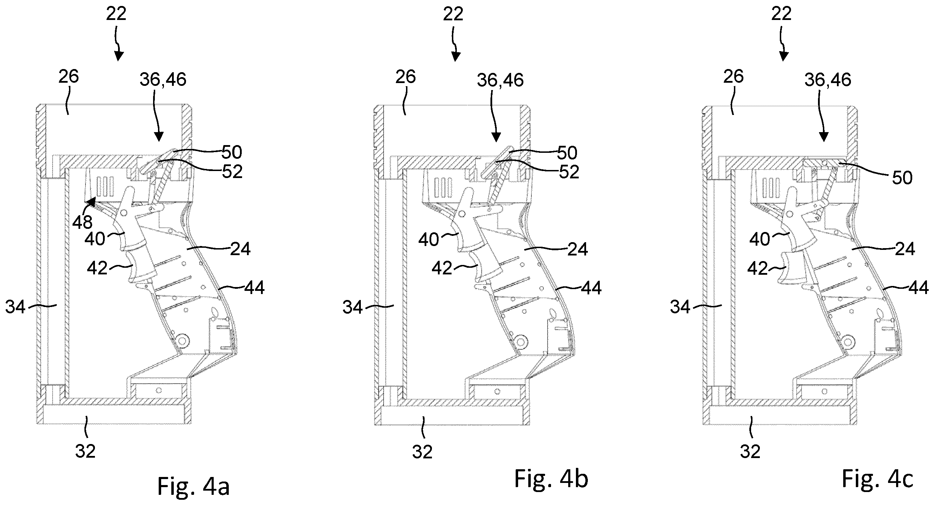

Wie nachfolgend noch im Detail erläutert, sind die Bedienelemente 40, 42 zwischen einer jeweiligen Betätigungsstellung und einer jeweiligen Nicht-Betätigungsstellung verschwenkbar. Beispielsweise zeigt Figur 4c eine Bedienkonfiguration, in welcher sich das erste Bedienelement 40 in der Betätigungsstellung und das zweite Bedienelement 42 in der Nicht-Betätigungsstellung befinden.

Die Figur 4b zeigt hingegen eine beispielhafte Bedienkonfiguration, in welcher sich das zweite Bedienelement 42 in der Betätigungsstellung und das erste Bedienelement 40 in der Nicht-Betätigungsstellung befinden. Zwischen diesen beiden Endstellungen (Betätigungsstellung und Nicht-Betätigungsstellung) durchlaufen die Bedienelemente 40, 42 jeweils eine Neutralstellung (vgl. Fig. 4a).

Bei nicht dargestellten Ausgestaltungen können das erste Bedienelement 40 und das zweite Bedienelement 42 auch translatorisch verlagerbar an dem Bediengriff 24 angeordnet sein, insbesondere linear geführt sein. Insofern können die Bedienelemente 40, 42 zwischen einer jeweiligen Betätigungsstellung und einer jeweiligen Nicht-Betätigungsstellung linear verschiebbar sein.

Wie nachfolgend noch im Detail erläutert, sind das erste Bedienelement 40 und das zweite Bedienelement 42 derart mechanisch zwangsgekoppelt, dass beim Überführen des ersten Bedienelementes 40 in Richtung der Betätigungsstellung (also bei Betätigen des ersten Bedienelements) das zweite Bedienelement 42 automatisch in Richtung der Nicht-Betätigungsstellung überführt wird und umgekehrt.

Wie in Figur 3 erkennbar, ist der Bediengriff 24 beispielhaft und bevorzugt als Hohlkörper ausgebildet mit einem Gehäuse 44. Die Bedienelemente 40, 42 sind dann vorzugsweise derart an dem Bediengriff 24 gehaltert, dass sie (ausgehend von einer Nicht-Betätigungsstellung in Richtung der Betätigungsstellung) in das Gehäuse 44 eindrückbar sind.

Die Ventileinrichtung 36 umfasst ein Belüftungsventil 46 zur Belüftung des Hubschlauchanschlusses 26 und somit zur Belüftung des Schlauchinnenraums 14 des Hubschlauchs 12. Im Konkreten ist mittels des Belüftungsventils 46 ein Strömungsweg von dem Hubschlauchanschluss 26 zur Umgebung wahlweise freigebbar oder absperrbar. Im dargestellten Beispiel ist das Belüftungsventil 46 dazu ausgebildet, bedarfsweise eine Strömungsverbindung zwischen dem Hubschlauchanschluss 26 und einem Hubschlauch-Belüftungsanschluss 48 freizugeben oder abzusperren. Der Hubschlauch-Belüftungsanschluss 48 ist beispielhaft durch entsprechende Durchbrüche oder Öffnungen 49 im Bereich des Bediengriffs 24 (insbesondere in dem Gehäuse 44 des Bediengriffs 24) gebildet (vgl. Fig. 3).

Das Belüftungsventil 46 umfasst eine Ventilklappe 50, welche eine Offenstellung (vgl. Fig. 4b) und eine Geschlossenstellung (vgl. Fig. 4c) einnehmen kann. In der Offenstellung ist ein Strömungsweg von dem Hubschlauchanschluss 26 zu dem Hubschlauch-Belüftungsanschluss 48 und somit zu einer Umgebung der Bedienvorrichtung 22 freigegeben. In der Geschlossenstellung ist dieser Strömungsweg verschlossen. Die Ventilklappe 50 ist zwischen diesen beiden Extremstellungen (Offenstellung und Geschlossenstellung), insbesondere stufenlos, verstellbar.

Wie aus Figur 3 ersichtlich, ist die Ventilklappe 50 um eine Schwenkachse 52 schwenkbar an der Bedienvorrichtung 22 gelagert. Die Schwenkachse 52 verläuft im dargestellten Beispiel in der Ventilklappenebene. Bei nicht dargestellten Ausgestaltungen kann die Schwenkachse 52 aber auch zu der Ventilklappenebene beabstandet sein.

Die Schwenkachse 52 ist beispielhaft und bevorzugt zentrisch angeordnet. Insbesondere ist die Ventilklappe 50 kreisscheibenförmig ausgebildet und die Schwenkachse 52 verläuft durch einen Kreismittelpunkt.

Das erste und das zweite Bedienelement 40, 42 sind mit der Ventilklappe 50 über eine Getriebeeinrichtung 54 mechanisch derart gekoppelt, dass durch Betätigen des ersten Bedienelements 40 oder des zweiten Bedienelements 42 die Ventilklappe 50 um die Schwenkachse 52 schwenkbar und somit ein Öffnungswinkel der Ventilklappe 50 verstellbar ist.

Im konkreten Beispiel ist das erste Bedienelement 40 über ein erstes Verbindungselement 58 (beispielhaft in Form einer ersten Verbindungsstange) mit der Ventilklappe 50 verbunden und das zweite Bedienelement 42 ist über ein zweites Verbindungselement 56 (beispielhaft in Form einer zweiten Verbindungsstange) mit der Ventilklappe 50 verbunden. Das erste Bedienelement 40 und das zweite Bedienelement 42 sind insofern über die Ventilklappe 50 miteinander zwangsgekoppelt.

Das erste Verbindungselement 58 ist dabei sowohl an dem ersten Bedienelement 40 als auch an der Ventilklappe 50 schwenkbar gelagert und das zweite Verbindungselement 56 ist sowohl an dem zweiten Bedienelement 42 als auch an der Ventilklappe 50 schwenkbar gelagert.

Wie aus Figur 3 erkennbar, greifen die Verbindungselemente 56, 58 an in Bezug auf die Schwenkachse 52 einander gegenüberliegenden Abschnitten der Ventilklappe 50 an. Auf diese Weise ist eine Zwangskopplung des ersten und zweiten Bedienelements 40, 42 derart realisiert, dass bei Überführen eines Bedienelements 40, 42 in Richtung dessen Betätigungsstellung (also beim Eindrücken dieses Bedienelements 40, 42 in das Gehäuse 44) das andere Bedienelement 40, 42 in Richtung der Nicht-Betätigungsstellung überführt wird (und somit aus dem Gehäuse 44 gedrückt wird).

Wie vorstehend erwähnt, sind der Bedienmechanismus 38, insbesondere das erste Bedienelement 40, das zweite Bedienelement 42 und/oder die Getriebeeinrichtung 54, und/oder die Ventilklappe 50 derart schleppend gelagert, dass die Ventilklappe 50 auch beim Loslassen der Bedienvorrichtung 22 in einer eingestellten Konfiguration verbleibt und somit der Hubschlauch in einer voreingestellten Länge verbleibt (Schwebeposition).

Die genaue Funktionsweise des Bedienmechanismus 38 und des Belüftungsventils 46 wird im Folgenden anhand beispielhafter Bedienkonfigurationen in Bezug auf die Figuren 4a bis 4c näher erläutert.

Die Figur 4a zeigt eine beispielhafte Bedienkonfiguration der Bedienvorrichtung 22, in welcher sich sowohl das erste Bedienelement 40 als auch das zweite Bedienelement 42 in der Neutralstellung befinden. In dieser Neutralstellung ist die Ventilklappe 50 zumindest teilweise geöffnet, sodass Umgebungsluft in den Schlauchinnenraum 14 des Hubschlauchs 12 einströmen kann. Beispielhaft und bevorzugt kann in der Neutralstellung ein Zustrom an Umgebungsluft derart eingestellt sein, dass der Hubschlauch 12 in einer definierten Ausgangs-Schwebeposition (zwischen einer maximal ausgezogenen und einer maximal eingezogenen Position) gehalten ist.

Wird nun ausgehend von dieser Bedienkonfiguration beispielsweise das zweite Bedienelement 42 betätigt (also das zweite Bedienelement 42 in Richtung seiner Betätigungsstellung eingedrückt), wird die Ventilklappe 50 weiter geöffnet und somit vermehrt Umgebungsluft in den Schlauchinnenraum 14 des Hubschlauches 12 eingeströmt, sodass dieser sich verlängert (vgl. Fig. 4b). Infolge der vorstehend beschriebenen Zwangskopplung zwischen erstem und zweitem Bedienelement 40, 42 wird dabei das erste Bedienelement 40 automatisch in die Nicht-Betätigungsstellung überführt (also aus dem Gehäuse 44 herausgedrückt, vgl. Fig. 4b).

Um den Hubschlauch 12 wieder zu verkürzen, kann die Bedienperson ausgehend von der Bedienkonfiguration gemäß Fig. 4b das erste Bedienelement 40 betätigen (also in das Gehäuse 44 eindrücken), wodurch die Ventilklappe 50 in die Geschlossenstellung überführt wird (vgl. Fig. 4c). Da nun keine oder nur noch in geringem Maße Umgebungsluft in den Schlauchinnenraum 14 einströmt, erhöht sich der Unterdruck in dem Hubschlauch 12, sodass dieser sich zusammenzieht. Wie bei einem Vergleich der Figuren 4b und 4c ersichtlich, wird bei der Betätigung des ersten Bedienelements 40 das zweite Bedienelement 42 infolge der Zwangskopplung über die Ventilklappe 50 in die Nicht-Betätigungsstellung überführt (also aus dem Gehäuse 44 herausgedrückt).

Die Sauggreifvorrichtung 20 kann grundsätzlich über eine separate Unterdruckversorgung mit Unterdruck versorgt werden. Vorzugsweise wird die Sauggreifvorrichtung 20 jedoch über die optionale Fluidführung 34 und den Sauganschluss 32 mit Unterdruck versorgt. In diesem Zusammenhang ist es möglich, dass an der Sauggreifvorrichtung 20 selbst ein Steuerventil (nicht dargestellt) vorgesehen ist, über welches eine über den Sauganschluss 32 bereitgestellte Unterdruckzufuhr wahlweise freigebbar (zum Ansaugen und somit Greifen eines Gegenstands) oder absperrbar (zum Ablegen des Gegenstands) ist.

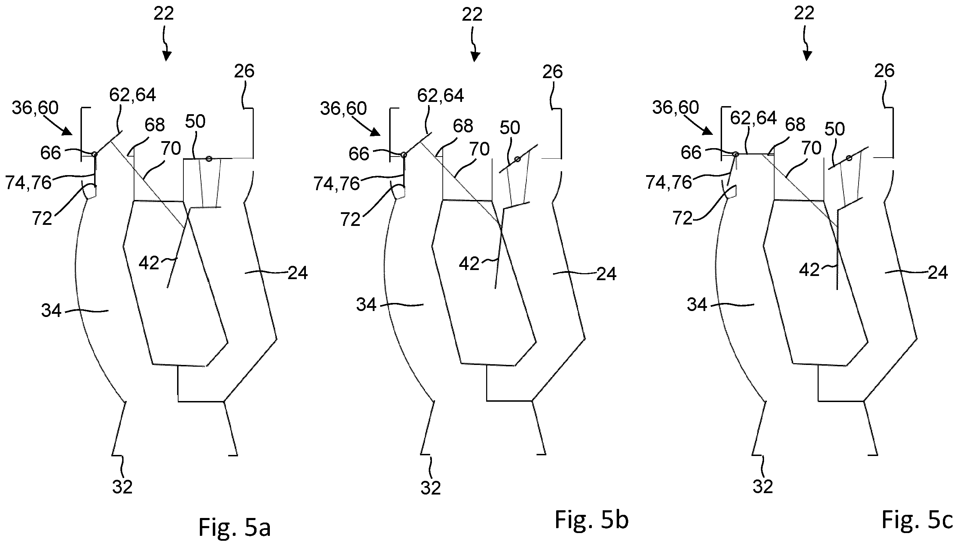

Die Figuren 5a bis 5c zeigen in vereinfachter schematischer Darstellung eine weitere Ausgestaltung, bei der eine solche Steuerung der Unterdruckzufuhr zu der Sauggreifvorrichtung 20 in der Bedienvorrichtung 22 realisiert ist. Die Bedienvorrichtung 20 gemäß Fig. 5a bis 5c ist mit der Bedienvorrichtung 22 gemäß Fig. 3 im Wesentlichen identisch, mit Ausnahme, dass zusätzlich ein Sperrventil 60 vorgesehen ist. Aus Gründen der Übersichtlichkeit wird daher auf eine wiederholte Beschreibung der verschiedenen Merkmale der Bedienvorrichtung 22 verzichtet. Zudem sind in den Figuren 5a bis 5c nur diejenigen Komponenten der Bedienvorrichtung 22 dargestellt, die zum Verständnis der nachstehend beschriebenen technischen Merkmale und Vorteile erforderlich sind.

Wie in Fig. 5a gezeigt, umfasst die Ventileinrichtung 36 ein Sperrventil 60 zum Absperren oder Freigeben eines Strömungswegs zwischen dem Hubschlauchanschluss 26 und dem Sauganschluss 32. Das Sperrventil 60 umfasst ein Sperrorgan 62, welches eine Freigabestellung (vgl. Fig. 5a) und eine Sperrstellung (vgl. Fig. 5c) einnehmen kann. In dem dargestellten Beispiel ist das Sperrorgan 62 als Sperrklappe 64 ausgebildet, welche um eine Schwenkachse 66 schwenkbar an der Bedienvorrichtung 22 gehaltert ist. Die Sperrklappe 64 ist dazu ausgebildet, eine Öffnung 68 der Fluidführung 34 wahlweise zu verschließen (Sperrstellung, vgl. Fig. 5c) oder freizugeben (Freigabestellung, vgl. Fig. 5a).

Die Sperrklappe 64 ist über eine Getriebeeinrichtung 70 (in Fig. 5a bis 5c lediglich schematisch angedeutet) mit dem zweiten Bedienelement 42 mechanisch derart gekoppelt, dass durch Betätigen zweiten Bedienelements 42 ein Öffnungswinkel der Sperrklappe 64 verstellbar ist und somit das Sperrventil 60 betätigbar ist (das erste Bedienelement 40 ist aus Gründen der Übersichtlichkeit in den Figuren 4a bis 4c nicht dargestellt). Bei nicht dargestellten Ausgestaltungen ist es auch möglich, dass die Sperrklappe 64 mit dem ersten Bedienelement 40 oder mit dem ersten und dem zweiten Bedienelement 42 entsprechend mechanisch gekoppelt ist.

In dem dargestellten Beispiel umfasst das Sperrventil 60 außerdem einen optionalen Sperrventil-Belüftungsanschluss 72 (in Fig. 5a bis 5c lediglich schematisch dargestellt) zur Belüftung des Sauganschluss 32. Wie aus Figur 5a ersichtlich, ist der Sperrventil-Belüftungsanschluss 72 dazu ausgebildet, die Fluidführung 34 mit der Umgebung zu verbinden.

Das Sperrventil 60 umfasst außerdem ein Schließorgan 74, beispielhaft und bevorzugt in Form einer Belüftungsklappe 76, welches eine Schließstellung (Sperrventil-Belüftungsanschluss 72 verschlossen, vgl. Fig. 5a) und eine Belüftungsstellung (Sperrventil-Belüftungsanschluss 72 freigegeben, vgl. Fig. 5c) einnehmen kann.

Wie nachfolgend noch im Detail erläutert, ist das Schließorgan 74 (Belüftungsklappe 76) mit dem Sperrorgan 62 (Sperrklappe 64) mechanisch derart zwangsgekoppelt, dass dann wenn sich die Sperrklappe 64 in der Sperrstellung befindet sich die Belüftungsklappe 76 in einer Belüftungsstellung befindet, in welcher der Sperrventil-Belüftungsanschluss 72 freigegeben ist (vgl. Fig. 5c) und dann, wenn sich die Sperrklappe 64 in der Freigabestellung befindet, die Belüftungsklappe 76 sich in einer Schließstellung befindet, in welcher der Sperrventil-Belüftungsanschluss 72 abgesperrt ist und somit eine Strömungsverbindung zwischen Umgebung und Sauganschluss 32 unterbrochen ist. Zu diesem Zweck sind die Sperrklappe 64 und die Belüftungsklappe 76 im dargestellten Beispiel um eine gemeinsame Schwenkachse 66 schwenkbar miteinander verbunden.

Das Zusammenwirken von Belüftungsventil 46 und Sperrventil 60 wird im Folgenden anhand beispielhafter Bedienkonfigurationen unter Bezugnahme auf die Figuren 5a bis 5c näher erläutert.

Die Figur 5a zeigt eine erste Bedienkonfiguration, in welcher sich das zweite Bedienelement 42 in der Nicht-Betätigungsstellung befindet und sich somit das erste Bedienelement 40 (nicht dargestellt) in der Betätigungsstellung befindet. Wie aus Fig. 5a ersichtlich, befinden sich in dieser Bedienkonfiguration die Ventilklappe 50 in Geschlossenstellung, die Sperrklappe 64 in Freigabestellung und die Belüftungsklappe in Schließstellung. Bei dieser Bedienkonfiguration wird insofern der Sauganschluss 32 und somit ein daran angeordneter Endeffektor 18 über die Fluidführung mit Unterdruck versorgt, sodass ein Gegenstand angesaugt werden kann. Dadurch, dass sich die Ventilklappe 50 in Geschlossenstellung befindet und somit keine oder nur wenig Umgebungsluft in den Schlauchinnenraum 14 einströmt, steigt der Unterdruck in dem Schlauchinnenraum 14, sodass sich der Hubschlauch 12 verkürzt. Die erste Bedienkonfiguration ist insofern zum Anheben eines Gegenstands geeignet.

Die Figur 5b zeigt eine zweite Bedienkonfiguration, in welcher sich das zweite Bedienelement 42 in einer Zwischenstellung zwischen Nicht-Betätigungsstellung und Betätigungsstellung, bspw. in der o.g. Neutralstellung, befindet und sich somit das erste Bedienelement 40 ebenfalls in einer Zwischenstellung, bspw. der Neutralstellung, befindet. Wie aus Fig. 5b ersichtlich, befinden sich in dieser Bedienkonfiguration die Ventilklappe 50 in einer zumindest teilweise geöffneten Stellung, die Sperrklappe 64 in Freigabestellung und die Belüftungsklappe 76 in Schließstellung. Bei dieser Bedienkonfiguration wird insofern der Sauganschluss 32 und somit ein daran angeordneter Endeffektor 18 über die Fluidführung mit Unterdruck versorgt, sodass ein Gegenstand angesaugt werden kann. Dadurch, dass die Ventilklappe 50 geöffnet ist, strömt Umgebungsluft in den Schlauchinnenraum 14 ein, sodass sich im Vergleich zur Konfiguration gemäß Fig. 5a ein Druck in dem Schlauchinnenraum erhöht und der Hubschlauch 12 sich infolgedessen verlängert. Die zweite Bedienkonfiguration ist insofern eine Bedienkonfiguration zum Absenken des Schlauchhebers 10.

Die Figur 5c zeigt eine dritte Bedienkonfiguration, in welcher sich das zweite Bedienelement 42 in der Betätigungsstellung befindet und sich somit das erste Bedienelement 40 in der Nicht-Betätigungsstellung befindet. Wie aus Fig. 5c ersichtlich, befinden sich in dieser Bedienkonfiguration die Ventilklappe 50 in der Offenstellung, die Sperrklappe 64 in Sperrstellung und die Belüftungsklappe 76 in Belüftungsstellung. Bei dieser Bedienkonfiguration wird insofern der Sauganschluss 32 und somit ein daran angeordneter Endeffektor 18 über den Sperrventil-Belüftungsanschluss 72 belüftet, sodass ein angesaugter Gegenstand abgelegt werden kann. Die dritte Bedienkonfiguration ist insofern eine Bedienkonfiguration zum Ablegen eines Gegenstands.

## Patentansprüche

1. Bedienvorrichtung (22) für einen Schlauchheber (10), der einen Endeffektor (18) und einen Hubschlauch (12) mit einem Schlauchinnenraum (14) umfasst, wobei der Hubschlauch (12) durch Beaufschlagung des Schlauchinnenraums (14) mit Unterdruck verkürzbar und durch Belüften des Schlauchinnenraums (14) wieder verlängerbar ist, umfassend:
- einen Hubschlauchanschluss (26) zur Strömungsverbindung mit dem Schlauchinnenraum (14) des Hubschlauchs (12);
- eine Endeffektor-Kupplung (30) zur Ankopplung des Endeffektors (18) an die Bedienvorrichtung (22);
- eine Ventileinrichtung (36) zur Steuerung von Strömungsverbindungen;
- einen Bedienmechanismus (38) zum Betätigen der Ventileinrichtung (36),
wobei die Ventileinrichtung (36) ein Belüftungsventil (46) zur Belüftung des Hubschlauchanschlusses (26) umfasst, wobei das Belüftungsventil (46) eine Ventilklappe (50) aufweist, welche zwischen einer Offenstellung und einer Geschlossenstellung verstellbar ist, wobei in der Offenstellung ein Strömungsweg von dem Hubschlauchanschluss (26) zu einer Umgebung freigegeben ist und in der Geschlossenstellung dieser Strömungsweg verschlossen ist, wobei der Bedienmechanismus (38) ein erstes Bedienelement (40) und ein zweites Bedienelement (42) umfasst, wobei das erste und das zweite Bedienelement (40, 42) mit der Ventilklappe (50) mechanisch derart gekoppelt sind, dass durch Betätigen des ersten und/oder des zweiten Bedienelements (40, 42) ein Öffnungswinkel der Ventilklappe (50) verstellbar ist, wobei das erste und das zweite Bedienelement (40, 42) manuell verstellbar an der Bedienvorrichtung (22) angeordnet sind und wobei das erste und das zweite Bedienelement (40, 42) über eine Getriebeeinrichtung (54) mit der Ventilklappe (50) mechanisch derart gekoppelt sind, dass eine Verstellbewegung des ersten Bedienelements und eine Verstellbewegung des zweiten Bedienelements in eine Verstellbewegung der Ventilklappe übertragen wird.

2. Bedienvorrichtung nach Anspruch 1, wobei das erste und das zweite Bedienelement (40, 42) mit der Ventilklappe (50) mechanisch derart gekoppelt sind, dass durch Betätigen des ersten Bedienelements (40) die Ventilklappe (50) in die Geschlossenstellung überführbar ist und durch Betätigen des zweiten Bedienelements (42) die Ventilklappe (50) in die Offenstellung überführbar ist.

3. Bedienvorrichtung (22) nach einem der vorherigen Ansprüche, wobei der Bedienmechanismus (38), insbesondere das erste Bedienelement (40), das zweite Bedienelement (42) und/oder die Getriebeeinrichtung (54), und/oder die Ventilklappe (50) derart selbsthemmend, insbesondere schleppend, ausgebildet sind, dass die Ventilklappe (50) in einer eingestellten Konfiguration verbleibt.

4. Bedienvorrichtung (22) nach einem der vorherigen Ansprüche, wobei die Ventilklappe (50) um eine, vorzugsweise zentrisch in Bezug auf die Ventilklappe (50) angeordnete, Schwenkachse (52) schwenkbar an der Bedienvorrichtung (22) gehaltert ist, insbesondere wobei das erste Bedienelement (40) über ein erstes Verbindungselement (58) mit der Ventilklappe (50) gekoppelt ist, wobei das zweite Bedienelement (42) über ein zweites Verbindungselement (56) mit der Ventilklappe (50) gekoppelt ist, wobei das erste und das zweite Verbindungselement (56, 58) an in Bezug auf die Schwenkachse (52) gegenüberliegenden Abschnitten der Ventilklappe (50) an der Ventilklappe (50) angreifen.

5. Bedienvorrichtung (22) nach einem der vorherigen Ansprüche, wobei das erste und das zweite Bedienelement (40, 42), insbesondere wechselseitig, eine Betätigungsstellung und eine Nicht-Betätigungsstellung einnehmen können, wobei in der Betätigungsstellung des ersten Bedienelementes (40) die Ventilklappe (50) in Geschlossenstellung ist und wobei in der Betätigungsstellung des zweiten Bedienelementes (42) die Ventilklappe (50) geöffnet, insbesondere in Offenstellung, ist, insbesondere wobei das erste und das zweite Bedienelement (40, 42), insbesondere über die Ventilklappe (50), derart mechanisch zwangsgekoppelt sind, dass beim Überführen des ersten Bedienelementes (40) in Richtung der Betätigungsstellung das zweite Bedienelement (42) automatisch in Richtung der Nicht-Betätigungsstellung überführt wird und umgekehrt.

6. Bedienvorrichtung (22) nach dem vorherigen Anspruch, wobei das erste und das zweite Bedienelement (40, 42) zwischen ihrer jeweiligen Nicht-Betätigungsstellung und ihrer jeweiligen Betätigungsstellung eine jeweilige Neutralstellung durchlaufen, wobei sich das erste Bedienelement (40) dann, wenn sich das zweite Bedienelement (42) in der Neutralstellung befindet, ebenfalls in der Neutralstellung befindet, insbesondere wobei die Ventilklappe (50) in der Neutralstellung des ersten und des zweiten Bedienelementes (40, 42) geöffnet ist, insbesondere wobei die Bedienvorrichtung (22) ein Gehäuse (44) aufweist, wobei das erste und das zweite Bedienelement (40, 42) an dem Gehäuse (44) derart, insbesondere translatorisch, verlagerbar gehaltert sind, dass die Bedienelemente (40, 42) in ihrer jeweiligen Betätigungsstellung relativ zu der Neutralstellung zumindest abschnittsweise in das Gehäuse (44) eingeschoben sind und in ihrer Nicht-Betätigungsstellung relativ zu der Neutralstellung zumindest abschnittsweise aus dem Gehäuse (44) hervorstehen.

7. Bedienvorrichtung (22) nach einem der vorherigen Ansprüche, wobei die Bedienvorrichtung (22) einen, insbesondere einhändig umgreifbaren, Bediengriff (24) umfasst, wobei das erste und das zweite Bedienelement (40, 42) an dem Bediengriff (24) angeordnet sind, insbesondere derart, dass das erste Bedienelement (40) mit einem ersten Finger einer Hand, insbesondere dem Zeigefinger, betätigbar ist und dass das zweite Bedienelement (42) mit einem zweiten Finger der Hand, insbesondere dem Mittelfinger, betätigbar ist.

8. Bedienvorrichtung nach einem der vorherigen Ansprüche, wobei die Endeffektor-Kupplung (30) einen Sauganschluss (32) zur Strömungsverbindung mit dem Endeffektor (18), insbesondere Sauggreifvorrichtung (20), umfasst, wobei der Hubschlauchanschluss (26) und der Sauganschluss (32) über eine Fluidführung (34) miteinander strömungsverbunden sind, wobei die Ventileinrichtung (36) außerdem ein Sperrventil (60) zum Absperren oder Freigeben eines Strömungswegs zwischen dem Hubschlauchanschluss (26) und dem Sauganschluss (32) umfasst, wobei das Sperrventil (60) ein Sperrorgan (62) aufweist, welches eine Freigabestellung und eine Sperrstellung einnehmen kann, wobei in der Freigabestellung der Strömungsweg zwischen dem Hubschlauchanschluss (26) und dem Sauganschluss (32) freigegeben ist und in der Sperrstellung der Strömungsweg zwischen dem Hubschlauchanschluss (26) und dem Sauganschluss (32) abgesperrt ist.

9. Bedienvorrichtung (22) nach dem vorherigen Anspruch, wobei das Sperrorgan (62) des Sperrventils (60) und die Ventilklappe (50) des Belüftungsventils (46) über das erste und/oder das zweite Bedienelement (40, 42) mechanisch derart miteinander gekoppelt sind, dass sich das Sperrorgan (62) in der Freigabestellung befindet, wenn sich die Ventilklappe (50) in der Geschlossenstellung befindet.

10. Bedienvorrichtung (22) nach einem der Ansprüche 8 oder 9, wobei das Sperrorgan (62) als Sperrklappe (64) ausgebildet ist, wobei die Sperrklappe (64) mit dem ersten oder dem zweiten Bedienelement (40, 42) mechanisch derart gekoppelt ist, dass durch Betätigen des ersten oder zweiten Bedienelements (40, 42) ein Öffnungswinkel der Sperrklappe (64) verstellbar ist, insbesondere die Sperrklappe (64) zwischen der Sperrstellung und der Freigabestellung verstellbar ist.

11. Bedienvorrichtung (22) nach einem der Ansprüche 8 bis 10, das Sperrventil (60) außerdem umfassend:
- einen Sperrventil-Belüftungsanschluss (72) zur Belüftung des Sauganschlusses (32), insbesondere der Fluidführung (34) zwischen Hubschlauchanschluss (26) und Sauganschluss (32),
- ein Schließorgan (74) zum Absperren oder Freigeben des Sperrventil-Belüftungsanschlusses (72), wobei das Schließorgan (74) eine Schließstellung und eine Belüftungsstellung einnehmen kann, wobei in der Schließstellung der Sperrventil-Belüftungsanschluss (72) abgesperrt ist und in der Belüftungsstellung freigegeben ist,
insbesondere wobei das Schließorgan (74) mit dem Sperrorgan (62) derart gekoppelt, insbesondere mechanisch zwangsgekoppelt, ist, dass dann, wenn sich das Sperrorgan (62) in der Sperrstellung befindet, sich das Schließorgan (74) in der Belüftungsstellung befindet und insbesondere dann, wenn sich das Sperrorgan in der Freigabestellung befindet, sich das Schließorgan (74) in der Schließstellung befindet.

12. Bedienvorrichtung (22) nach dem vorherigen Anspruch bei Rückbezug auf Anspruch 10, wobei das Schließorgan (74) als Belüftungsklappe (76) ausgebildet ist, wobei die Sperrklappe (64) und die Belüftungsklappe (76) um eine gemeinsame Schwenkachse (66) schwenkbar an der Bedienvorrichtung (22) gehaltert sind.

13. Bedienvorrichtung nach einem der Ansprüche 11 oder 12, wobei die Ventilklappe (50), das Sperrorgan (62) und das Schließorgan (74) über den Bedienmechanismus (38) miteinander mechanisch derart gekoppelt sind, dass
- in einer ersten Bedienkonfiguration, insbesondere in welcher das erste Bedienelement (40) in der Betätigungsstellung ist und das zweite Bedienelement (42) in der Nicht-Betätigungsstellung, die Ventilklappe (50) in der Geschlossenstellung ist, das Sperrorgan (62) in der Freigabestellung ist und das Schließorgan (74) in der Schließstellung ist;
- in einer zweiten Bedienkonfiguration, insbesondere in welcher das erste und das zweite Bedienelement (40, 42) jeweils in einer Zwischenstellung zwischen ihrer Betätigungsstellung und ihrer Nicht-Betätigungsstellung, vorzugsweise in der jeweiligen Neutralstellung, sind, die Ventilklappe (50) zumindest teilweise geöffnet ist, das Sperrorgan (62) in der Freigabestellung ist und das Schließorgan (74) in der Schließstellung ist, und
- in einer dritten Bedienkonfiguration, insbesondere in welcher das erste Bedienelement (40) in der Nicht-Betätigungsstellung ist und das zweite Bedienelement (42) in der Betätigungsstellung ist, die Ventilklappe (50) in der Offenstellung ist, das Sperrorgan (62) in der Sperrstellung ist und das Schließorgan (74) in der Belüftungsstellung ist.

14. Schlauchheber (10) mit einer Bedienvorrichtung (22) nach einem der vorherigen Ansprüche.

## Claims

1. An operating device (22) for a tube lifter (10) that comprises an end effector (18) and a lifting tube (12) having a tube interior (14), the lifting tube (12) being able to be shortened by applying a vacuum to the tube interior (14) and being able to be extended again by ventilating the tube interior (14), comprising:
- a lifting tube port (26) for fluidic connection to the tube interior (14) of the lifting tube (12);
- an end effector coupling (30) for coupling the end effector (18) to the operating device (22);
- a valve device (36) for controlling fluidic connections;
- an operating mechanism (38) for actuating the valve device (36),
the valve device (36) comprising a ventilation valve (46) for ventilating the lifting tube port (26), wherein the ventilation valve (46) has a valve flap (50), which is adjustable between an open position and a closed position, in the open position a flow path from the lifting tube port (26) to the surroundings being released and in the closed position this flow path being closed, the operating mechanism (38) comprising a first operating element (40) and a second operating element (42), the first and the second operating element (40, 42) being mechanically coupled to the valve flap (50) in such a way that by actuating the first and/or the second operating element (40, 42) an opening angle of the valve flap (50) is adjustable,
wherein the first and the second operating element (40, 42) are arranged on the operating device (22) manually adjustably and wherein the first and the second operating elements (40, 42) are mechanically coupled to the valve flap (50) via a transmission device (54) in such a way that an adjusting movement of the first operating element and an adjusting movement of the second operating element is transferred into an adjusting movement of the valve flap.

2. The operating device according to claim 1, wherein the first and the second operating element (40, 42) are mechanically coupled to the valve flap (50) in such a way that, by actuating the first operating element (40), the valve flap (50) can be transferred into the closed position and by actuating the second operating element (42) the valve flap (50) can be transferred into the open position.

3. The operating device (22) according to any of the preceding claims, wherein the operating mechanism (38), in particular the first operating element (40), the second operating element (42) and/or the transmission device (54), and/or the valve flap (50) are designed to be self-locking, in particular dragging, in such a way that the valve flap (50) remains in a set configuration.

4. The operating device (22) according to any of the preceding claims, wherein the valve flap (50) is held on the operating device (22) so as to be pivotable about a pivot axis (52), preferably arranged centrally in relation to the valve flap (50), in particular wherein the first operating element (40) is coupled to the valve flap (50) via a first connecting element (58), wherein the second operating element (42) is coupled to the valve flap (50) via a second connecting element (56), wherein the first and the second connecting element (56, 58) engage on the valve flap (50) at portions of the valve flap (50) opposite the pivot axis (52).

5. The operating device (22) according to any of the preceding claims, wherein the first and the second operating elements (40, 42) can assume, in particular alternately, an actuating position and a non-actuating position, wherein the valve flap (50) is in the closed position in the actuating position of the first operating element (40), and wherein the valve flap (50) is open, in particular in the open position, in the actuating position of the second operating element (42), in particular wherein the first and the second operating element (40, 42), in particular via the valve flap (50), are mechanically forcibly coupled in such a way that, when the first operating element (40) is transferred in the direction of the actuating position, the second operating element (42) is automatically transferred in the direction of the non-actuating position, and vice versa.

6. The operating device (22) according to the preceding claim, wherein the first and the second operating element (40, 42) between their respective non-actuating positions and their respective actuating positions pass through respective neutral positions, wherein the first operating element (40) is likewise in the neutral position when the second operating element (42) is in the neutral position, in particular wherein the valve flap (50) is open in the neutral position of the first and the second operating element (40, 42), in particular wherein the operating device (22) has a housing (44), wherein the first and the second operating element (40, 42) are held on the housing (44) displaceably, in particular translationally, in such a way that the operating elements (40, 42) are pushed into the housing (44) at least in portions in their respective actuating positions relative to the neutral position and in their non-actuating position protrude from the housing (44) relative to the neutral position at least in portions.

7. The operating device (22) according to any of the preceding claims, wherein the operating device (22) comprises an operating handle (24), in particular an operating handle that can be grasped by one hand, wherein the first and the second operating element (40, 42) are arranged on the operating handle (24), in particular in such a way that the first operating element (40) can be actuated with a first finger of a hand, in particular the index finger, and in such a way that the second operating element (42) can be actuated with a second finger of the hand, in particular the middle finger.

8. The operating device according to any of the preceding claims, wherein the end effector coupling (30) comprises a suction port (32) for fluidic connection to the end effector (18), in particular a suction gripping device (20), wherein the lifting tube port (26) and the suction port (32) are fluidically connected to one another via a fluid guide (34), wherein the valve device (36) additionally has a shut-off valve (60) for blocking or releasing a flow path between the lifting tube port (26) and the suction port(32), wherein the shut-off valve (60) has a shut-off member (62) which can assume a release position and a blocking position, wherein in the release position the flow path between the lifting tube port (26) and the suction port (32) is released and in the blocking position the flow path between the lifting tube port (26) and the suction port (32) is blocked.

9. The operating device (22) according to the preceding claim, wherein the shut-off member (62) of the shut-off valve (60) and the valve flap (50) of the ventilation valve (46) are mechanically coupled to one another via the first and/or the second operating element (40, 42) in such a way that the shut-off member (62) is in the release position when the valve flap (50) is in the closed position.

10. The operating device (22) according to any of claims 8 or 9, wherein the shut-off member (62) is designed as a shut-off flap (64), wherein the shut-off flap (64) is mechanically coupled to the first or the second operating element (40, 42) in such a way that an opening angle of the shut-off flap (64) is adjustable by actuating the first or second operating element (40, 42), in particular the shut-off flap (64) is adjustable between the blocking position and the release position.

11. The operating device (22) according to any one of claims 8 to 10, the shut-off valve (60) additionally comprising:
- a shut-off valve ventilation port (72) for ventilating the suction port (32), in particular the fluid guide (34) between the lifting tube port (26) and the suction port (32),
- a closing member (74) for blocking or releasing the shut-off valve ventilation port (72), wherein the closing member (74) can assume a closed position and a ventilation position, wherein the shut-off valve ventilation port (72) is shut off in the closed position and is released in the ventilation position, in particular wherein the closing member (74) is coupled, in particular mechanically forcibly coupled, to the shut-off member (62) in such a way that, when the shut-off member (62) is in the blocking position, the closing member (74) is in the ventilation position and, in particular when the shut-off member is in the release position, the closing member (74) is in the closed position.

12. The operating device (22) according to the preceding claim, with reference to claim 10, wherein the closing member (74) is designed as a ventilation flap (76), wherein the shut-off flap (64) and the ventilation flap (76) are held on the operating device (22) so as to be pivotable about a common pivot axis (66).

13. The operating device according to any of claims 11 to 12, wherein the valve flap (50), the shut-off member (62) and the closing member (74) are mechanically coupled to one another via the operating mechanism (38) in such a way that
- in a first operating configuration, in particular in which the first operating element (40) is in the actuating position and the second operating element (42) in the non-actuating position, the valve flap (50) is in the closed position, the shut-off member (62) is in the release position, and the closing member (74) is in the closed position;
- in a second operating configuration, in particular in which the first and the second operating element (40, 42) are each in an intermediate position between their actuating position and their non-actuating position, preferably in their respective neutral positions, the valve flap (50) is at least partially open, the shut-off member (62) is in the release position, and the closing member (74) is in the closed position, and
- in a third operating configuration, in particular in which the first operating element (40) is in the non-actuating position and the second operating element (42) is in the actuating position, the valve flap (50) is in the open position, the shut-off member (62) is in the blocking position, and the closing member (74) is in the ventilation position.

14. A tube lifter (10) comprising an operating device (22) according to any of the preceding claims.

## Revendications

1. Dispositif de manipulation (22) pour un dispositif de levage à tuyau (10) qui comprend un organe terminal effecteur (18) et un tuyau de levage (12) comportant un espace intérieur de tuyau (14), dans lequel le tuyau de levage (12) peut être raccourci par sollicitation de l'espace intérieur de tuyau (14) avec une dépression et peut être rallongé à nouveau par aération de l'espace intérieur de tuyau (14), comprenant:
- un raccord de tuyau de levage (26) pour la liaison par écoulement avec l'espace intérieur de tuyau (14) du tuyau de levage (12);
- un moyen d'accouplement pour organe terminal effecteur (30) permettant d'accoupler l'organe terminal effecteur (18) au dispositif de manipulation (22);
- un appareil à soupape (36) permettant de commander les liaisons par écoulement;
- un mécanisme de manipulation (38) permettant d'actionner l'appareil à soupape (36),
dans lequel l'appareil à soupape (36) comprend une soupape d'aération (46) pour l'aération du raccord de tuyau de levage (26), dans lequel la soupape d'aération (46) présente un clapet de soupape (50) qui peut être déplacé entre une position ouverte et une position fermée, dans lequel, dans la position ouverte, une voie d'écoulement est libérée depuis le raccord de tuyau de levage (26) jusqu'à un environnement et, dans la position fermée, ladite voie d'écoulement est fermée, dans lequel le mécanisme de manipulation (38) comprend un premier élément de manipulation (40) et un second élément de manipulation (42), dans lequel le premier et le second élément de manipulation (40, 42) sont accouplés mécaniquement au clapet de soupape (50) de telle sorte que, au moyen de l'actionnement du premier et/ou du second élément de manipulation (40, 42), un angle d'ouverture du clapet de soupape (50) peut être réglé, dans lequel le premier et le second élément de manipulation (40, 42) sont disposés sur le dispositif de manipulation (22) de manière à pouvoir être réglés manuellement et dans lequel le premier et le second élément de manipulation (40, 42) sont accouplés mécaniquement au clapet de soupape (50) par l'intermédiaire d'un appareil de transmission (54) de telle sorte qu'un mouvement de réglage du premier élément de manipulation et un mouvement de réglage du second élément de manipulation sont transmis en un mouvement de réglage du clapet de soupape.

2. Dispositif de manipulation selon la revendication 1, dans lequel le premier et le second élément de manipulation (40, 42) sont accouplés mécaniquement au clapet de soupape (50) de telle sorte que, au moyen de l'actionnement du premier élément de manipulation (40), le clapet de soupape (50) peut être transféré dans la position fermée et que, au moyen de l'actionnement du second élément de manipulation (42), le clapet de soupape (50) peut être transféré dans la position ouverte.

3. Dispositif de manipulation (22) selon l'une des revendications précédentes, dans lequel le mécanisme de manipulation (38), en particulier le premier élément de manipulation (40), le second élément de manipulation (42) et/ou l'appareil de transmission (54), et/ou le clapet de soupape (50) sont conçus de manière à être autobloquants, en particulier de manière lente, de telle sorte que le clapet de soupape (50) reste dans une configuration réglée.

4. Dispositif de manipulation (22) selon l'une des revendications précédentes, dans lequel le clapet de soupape (50) est maintenu sur le dispositif de manipulation (22) de manière à pouvoir pivoter autour d'un axe de pivotement (52), de préférence disposé de manière à être centré par rapport au clapet de soupape (50), en particulier dans lequel le premier élément de manipulation (40) est accouplé au clapet de soupape (50) par l'intermédiaire d'un premier élément de liaison (58), dans lequel le second élément de manipulation (42) est accouplé au clapet de soupape (50) par l'intermédiaire d'un second élément de liaison (56), dans lequel le premier et le second élément de liaison (56, 58) viennent en prise sur le clapet de soupape (50) sur des sections du clapet de soupape (50) opposées par rapport à l'axe de pivotement (52).

5. Dispositif de manipulation (22) selon l'une des revendications précédentes, dans lequel le premier et le second élément de manipulation (40, 42) peuvent prendre, en particulier alternativement, une position d'actionnement et une position de non-actionnement, dans lequel, dans la position d'actionnement du premier élément de manipulation (40), le clapet de soupape (50) est dans la position fermée et dans lequel, dans la position d'actionnement du second élément de manipulation (42), le clapet de soupape (50) est ouvert, en particulier est dans la position ouverte, en particulier dans lequel le premier et le second élément de manipulation (40, 42) sont accouplés mécaniquement de manière forcée, en particulier par l'intermédiaire du clapet de soupape (50), de telle sorte que, lors du transfert du premier élément de manipulation (40) en direction de la position d'actionnement, le second élément de manipulation (42) est automatiquement transféré en direction de la position de non-actionnement et inversement.

6. Dispositif de manipulation (22) selon la revendication précédente, dans lequel le premier et le second élément de manipulation (40, 42) passent par une position neutre respective entre leur position de non-actionnement respective et leur position d'actionnement respective, dans lequel le premier élément de manipulation (40) se trouve également dans la position neutre lorsque le second élément de manipulation (42) se trouve dans la position neutre, en particulier dans lequel le clapet de soupape (50) est ouvert dans la position neutre du premier et du second élément de manipulation (40, 42), en particulier dans lequel le dispositif de manipulation (22) présente un boîtier (44), dans lequel le premier et le second élément de manipulation (40, 42) sont maintenus sur le boîtier (44) de manière à pouvoir être déplacés, en particulier en translation, de telle sorte que les éléments de manipulation (40, 42), dans leur position d'actionnement respective par rapport à la position neutre, sont insérés au moins dans certaines sections dans le boîtier (44) et, dans leur position de non-actionnement par rapport à la position neutre, dépassent au moins dans certaines sections du boîtier (44) .

7. Dispositif de manipulation (22) selon l'une des revendications précédentes, dans lequel le dispositif de manipulation (22) comprend une poignée de manipulation (24), en particulier pouvant être saisie d'une seule main, dans lequel le premier et le second élément de manipulation (40, 42) sont disposés sur la poignée de manipulation (24), en particulier de telle sorte que le premier élément de manipulation (40) peut être actionné avec un premier doigt d'une main, en particulier l'index, et que le second élément de manipulation (42) peut être actionné avec un deuxième doigt de la main, en particulier le majeur.

8. Dispositif de manipulation selon l'une des revendications précédentes, dans lequel le moyen d'accouplement pour organe terminal effecteur (30) comprend un raccord d'aspiration (32) pour la liaison par écoulement avec l'organe terminal effecteur (18), en particulier le dispositif de préhension par aspiration (20), dans lequel le raccord de tuyau de levage (26) et le raccord d'aspiration (32) sont reliés l'un à l'autre par l'intermédiaire d'un guide de fluide (34), dans lequel l'appareil à soupape (36) comprend en outre une soupape de blocage (60) permettant de bloquer ou de libérer une voie d'écoulement entre le raccord de tuyau de levage (26) et le raccord d'aspiration (32), dans lequel la soupape de blocage (60) présente un organe de blocage (62) qui peut prendre une position de libération et une position de blocage, dans lequel la voie d'écoulement entre le raccord de tuyau de levage (26) et le raccord d'aspiration (32) est libérée dans la position de libération et la voie d'écoulement entre le raccord de tuyau de levage (26) et le raccord d'aspiration (32) est bloquée dans la position de blocage.

9. Dispositif de manipulation (22) selon la revendication précédente, dans lequel l'organe de blocage (62) de la soupape de blocage (60) et le clapet de soupape (50) de la soupape d'aération (46) sont accouplés mécaniquement l'un à l'autre par l'intermédiaire du premier et/ou du second élément de manipulation (40, 42) de telle sorte que l'organe de blocage (62) se trouve dans la position de libération lorsque le clapet de soupape (50) se trouve dans la position fermée.

10. Dispositif de manipulation (22) selon l'une des revendications 8 ou 9, dans lequel l'organe de blocage (62) est réalisé sous la forme d'un clapet de blocage (64), dans lequel le clapet de blocage (64) est accouplé mécaniquement au premier ou au second élément de manipulation (40, 42) de telle sorte que, au moyen de l'actionnement du premier ou du second élément de manipulation (40, 42), un angle d'ouverture du clapet de blocage (64) peut être réglé, en particulier le clapet de blocage (64) peut être réglé entre la position de blocage et la position de libération.

11. Dispositif de manipulation (22) selon l'une des revendications 8 à 10, la soupape de blocage (60) comprenant en outre:
- un raccord d'aération de soupape de blocage (72) pour l'aération du raccord d'aspiration (32), en particulier du guide de fluide (34) entre le raccord de tuyau de levage (26) et le raccord d'aspiration (32),
- un organe de fermeture (74) permettant de bloquer ou de libérer le raccord d'aération de soupape de blocage (72), dans lequel l'organe de fermeture (74) peut prendre une position fermée et une position d'aération, dans lequel le raccord d'aération de soupape de blocage (72) est bloqué dans la position fermée et est libéré dans la position d'aération, en particulier dans lequel l'organe de fermeture (74) est accouplé à l'organe de blocage (62), en particulier est accouplé mécaniquement de manière forcée, de telle sorte que, lorsque l'organe de blocage (62) se trouve dans la position de blocage, l'organe de fermeture (74) se trouve dans la position d'aération et en particulier lorsque l'organe de blocage se trouve dans la position de libération, l'organe de fermeture (74) se trouve dans la position fermée.

12. Dispositif de manipulation (22) selon la revendication précédente lorsqu'elle se rapporte à la revendication 10, dans lequel l'organe de fermeture (74) est réalisé sous la forme d'un clapet d'aération (76), dans lequel le clapet de blocage (64) et le clapet d'aération (76) sont maintenus sur le dispositif de manipulation (22) de manière à pouvoir pivoter autour d'un axe de pivotement (66) commun.

13. Dispositif de manipulation selon l'une des revendications 11 ou 12, dans lequel le clapet de soupape (50), l'organe de blocage (62) et l'organe de fermeture (74) sont accouplés mécaniquement entre eux par l'intermédiaire du mécanisme de manipulation (38) de telle sorte que
- dans une première configuration de manipulation, en particulier dans laquelle le premier élément de manipulation (40) est dans la position d'actionnement et le second élément de manipulation (42) est dans la position de non-actionnement, le clapet de soupape (50) est dans la position fermée, l'organe de blocage (62) est dans la position de libération et l'organe de fermeture (74) est dans la position fermée;
- dans une deuxième configuration de manipulation, en particulier dans laquelle le premier et le second élément de manipulation (40, 42) sont respectivement dans une position intermédiaire entre leur position d'actionnement et leur position de non-actionnement, de préférence dans la position neutre respective, le clapet de soupape (50) est au moins partiellement ouvert, l'organe de blocage (62) est dans la position de libération et l'organe de fermeture (74) est dans la position fermée, et
- dans une troisième configuration de manipulation, en particulier dans laquelle le premier élément de manipulation (40) est dans la position de non-actionnement et le second élément de manipulation (42) est dans la position d'actionnement, le clapet de soupape (50) est dans la position ouverte, l'organe de blocage (62) est dans la position de blocage et l'organe de fermeture (74) est dans la position d'aération.

14. Dispositif de levage à tuyau (10) comportant un dispositif de manipulation (22) selon l'une des revendications précédentes.
